# FASCICULE DE BREVET EUROPEEN

(11) **EP 1 695 406 B1**
(45) Date de publication et mention de la délivrance du brevet: **09.09.2009**
(21) Numéro de dépôt: 04816543.5
(22) Date de dépôt: 14.12.2004
(51) Int. Cl.: H01M 8/02

(54) **PLAQUE D'ALIMENTATION D'UNE CELLULE DE PILE A COMBUSTIBLE A CIRCULATIONS COPLANAIRES**
STROMVERSORGUNGSPLATTE FÜR EINE COPLANARSCHALTUNGS-BRENNSTOFFZELLE
POWER SUPPLY PLATE FOR A COPLANAR CIRCUIT FUEL CELL

(30) Priorité: 15.12.2003 FR 0351054
(43) Date de publication de la demande: 30.08.2006
(73) Titulaire: HELION, 13545 Aix en Provence Cedex (FR)
(72) Inventeur: NIETSCH, Thomas, F-13290 Aix en Provence (FR); VERDU, Olivier, F-13100 Aix en Provence (FR)
(74) Mandataire: Poulin, Gérard
(86) Numéro de dépôt international: PCT/FR2004/050689
(87) Numéro de publication internationale: WO 2005/060032

(56) Documents cités:
- US-A- 5 804 326
- PATENT ABSTRACTS OF JAPAN vol. 2000, no. 06, 22 septembre 2000 (2000-09-22) & JP 2000 067885 A (AISIN SEIKI CO LTD), 3 mars 2000 (2000-03-03)
- PATENT ABSTRACTS OF JAPAN vol. 2000, no. 11, 3 janvier 2001 (2001-01-03) & JP 2000 228207 A (NISSAN MOTOR CO LTD), 15 août 2000 (2000-08-15)

## Description

### Domaine de l'invention

L'invention concerne le domaine des piles à combustible constituées d'un empilement d'un grand nombre d'étages comprenant chacun un élément de base constitué d'une membrane séparatrice placée entre deux électrodes, placé lui-même entre deux plaques polaires ou bipolaires.

Ce type de pile à combustible peut trouver son application dans de nombreux secteurs d'activité, aussi bien dans le secteur militaire que dans le secteur civil. Les applications militaires incluent notamment la propulsion des sous-marins, les générateurs électriques mobiles et les unités de basses puissances, en remplacement des batteries. Les applications militaires ou civiles concernent, entre autres, le secteur du transport, par exemple pour la propulsion de véhicules urbains de transport en commun de surface, tels que les autobus, les tramways et autres trolleys bus. Les applications pour les automobiles, les camions et les trains sont également envisagées. D'autres applications stationnaires sont possibles, notamment sur des systèmes stationnaires de production localisés d'électricité, comme ceux utilisés dans les hôpitaux et autres bâtiments de service où l'éventualité d'une interruption d'alimentation en électricité doit être exclue. Enfin, d'autres applications potentielles existent dans le domaine des dispositifs portables et miniaturisés.

### Art antérieur et problème posé

La pile à combustible est un dispositif électrochimique qui convertit directement l'énergie chimique d'un combustible, dans certains cas renouvelable, en énergie électrique. Le principe de fonctionnement de ce générateur électrochimique repose sur la réaction de synthèse électrochimique de l'eau. De nombreuses piles à combustibles sont constituées d'une succession d'étages comprenant chacun un élément de base constitué de deux électrodes, dont une anode et une cathode, auxquelles sont apportés continûment un comburant, par exemple de l'oxygène de l'air, et un combustible, par exemple de l'hydrogène, qui restent séparées par une membrane échangeuse d'ions faisant office d'électrolyte. A l'anode, le combustible subit une oxydation catalytique qui libère protons et électrons dans le cas d'une pile à combustible du type à membrane échangeuse de protons. Les électrons circulent le long du circuit électrique extérieur, tandis que les protons sont transportés dans l'électrolyte vers la cathode, où ils se recombinent avec les électrons et le combustible, sous l'effet d'une réduction catalytique pour produire de l'eau. Ces deux opérations s'accompagnent de l'établissement d'une différence de potentiels entre les deux électrodes:

Le rendement de la pile à combustible, théoriquement légèrement inférieur à 100 %, atteint des valeurs supérieures à celles des moteurs thermiques. De plus, la pile à combustible est silencieuse et peu polluante, même si le combustible est un composé organique. Ce bon rendement et cette faible production sont parmi les raisons de la recherche et du développement dans ce domaine.

Les divers types de piles à combustible peuvent être définis par la nature de l'électrolyte constituant la membrane. Un des types de pile à combustible la plus avancée dans le domaine des températures inférieures à 100°C est celle des piles à combustible à électrolyte polymère. La présente invention se rapporte au domaine des piles à combustible du type PEM (protons exchange membrane), pour lesquels l'électrolyte est une membrane échangeuse de protons).

Mécaniquement, la pile à combustible est constituée d'un empilement de cellules électrochimiques constituant un étage, chaque cellule étant constituée de plaques séparatrices, polaires ou bipolaires, entre lesquelles est pris en sandwich un élément de base EME (Electrode, Membrane, Electrode). Un tel empilement de cellules de base constituant le cour d'une pile à combustible est désigné par l'homme du métier par le vocable anglais « stack ».

Dans un empilement de piles à combustible du type PEM, les plaques séparatrices, appelées plaques bipolaires, assurent également la fonction de distribution des gaz réactifs, constitués par l'oxygène ou l'air et l'hydrogène, de collection des élections produits et d'évacuation des produits de la réaction, notamment l'eau. Chaque plaque bipolaire est en contact par une de ces faces avec une anode d'un élément de base N, et sur l'autre face avec une cathode d'un élément de base de rang N+1.

Enfin, dans les piles à combustible de grande puissance, une derrière fonction de ces plaques polaires ou bipolaires est la réfrigération de l'ensemble de l'empilement par une circulation d'un liquide réfrigérant entre les différentes cellules de base de la pile à combustible. Le fluide réfrigérant circule dans des canaux spécifiquement conçus et intégrés dont les plaques polaires ou bipolaires. On note que cette réfrigération peut ne pas se faire à tous les étages, mais de manière périodique dans l'empilement.

La demande de brevet français publiée sous le numéro FR-2 810 795 décrit une plaque bipolaire qui réalise la distribution du carburant et du combustible sur ses deux faces grâce à deux canaux de circulation. Au milieu du squelette de cette plaqué bipolaire, entre deux plaques métalliques, la circulation du fluide réfrigérant est organisée. Ces plaques bipolaires possèdent une épaisseur conséquente due à la conception, qui impose que les circulation, d'une part, de combustible et de carburant et, d'autre part, de liquide réfrigérant n'interfèrent pas. C'est pourquoi, elles sont placées dans des plans respectifs différents.

D'autre part, le document US 5,804,326 (Chan John Ka Ki et al.), notamment par les figures 5 et 6, décrit des plaques comprenant, sur une même face, des circuits d'eau c'est-à-dire de réfrigérant et des circuits de combustible et de carburant.

Par contre, il n'y a pas de circulation de réfrigérant à l'intérieur des plaques.

L'épaisseur de cette plaque bipolaire, comme de celles de nombreuses autres piles, est donc épaisse.

Le but de l'invention est de remédier à cet inconvénient en proposant un type différent de plaque polaire ou bipolaire.

### Résumé de l'invention

A cet effet, l'objet principal de l'invention est une plaque d'alimentation d'au moins une cellule de pile à combustible, comprenant :
- des trous d'alimentation en combustible, comburant et fluide de réfrigération
- deux faces opposées sur au moins une desquelles se trouvent des canaux de circulation pour le combustible ou le comburant ; et
- au moins un canal de réfrigération se trouvant sur la ou les mêmes faces que celle(s) où se trouvent les canaux de circulation du combustible ou du comburant, de façon à être coplanaire(s) avec ces canaux de circulation, la plaque d'alimentation possédant ainsi une épaisseur minimalisée, la réfrigération se faisant au coeur de la surface active. Elle est donc plus efficace.

Selon l'invention, les premiers canaux de circulation respectivement du combustible et du comburant se trouvent sur les deux faces de la plaque, la réfrigération ayant lieu sur les deux faces de la plaque, la plaque constituant ainsi une plaque bipolaire, un seul canal de réfrigération se trouvant à la fois sur les deux faces et, de ce fait, possède plusieurs passages de traversée de la plaque d'une face à l'autre et des ramifications.

Dans la réalisation principale de l'invention, on place l'entrée et la sortie du canal de réfrigération sur la face opposée à celle où se trouve ce canal de réfrigération, celui-ci traversant l'épaisseur de la plaque.

Il peut s'avérer avantageux de grouper les trous d'alimentation en comburant, combustible et fluide de réfrigération et les entrées et sorties des canaux de circulation et de réfrigération en un endroit déterminé de la plaque.

Concernant la répartition de différents canaux sur la ou les faces de la plaque, on peut prévoir que les trajectoires des canaux de circulation et du ou des canaux de réfrigération soient intercalées les unes par rapport aux autres, épousant ainsi le même tracé.

Une trajectoire préférentielle des canaux de circulation de la plaque selon l'invention prévoit que celle-ci soit en zigzag.

Concernant la trajectoire des canaux de circulation, il est également possible que ceux-ci soient parallèles entre eux, de manière à former une structure en peigne.

Dans une réalisation préférentielle du ou des canaux de réfrigération, ceux-ci possèdent des ramifications dont les entrées et sorties sont espacées sur une grande partie de la longueur de la plaque.

Une particularité de cette réalisation peut être que l'orientation des canalisations soit décalée de 90° d'une face par rapport à l'autre.

Dans ces derniers cas, on prévoit que la traversée de la plaque par le canal de réfrigération s'effectue à l'extrémité de chaque ramification, avec un changement d'orientation de 90°C pour le canal de réfrigération, à la traversée de la plaque.

Dans une réalisation particulière de la plaque selon l'invention, celle-ci est constituée d'une plaque ondulée, de façon à former des premiers canaux de circulation pour le combustible sur une première face intercalée avec des canaux de réfrigération parallèles sur une première face, et des canaux de circulation du comburant intercalés avec des canaux de réfrigération parallèles, de manière à ce que les canaux de la première face forment des séparations pour les canaux de la deuxième face et vice versa, tous les canaux se trouvant sur le même plan, la plaque constituant alors une plaque bipolaire.

Dans ce cas, la plaque est constituée principalement d'une tôle ondulée entourée éventuellement d'un cadre traversé par les trous d'alimentation.

Dans différentes réalisations, on prévoit que les canaux de réfrigération ou leurs ramifications soient placés entre plusieurs canaux de circulation du comburant ou du combustible.

Dans un mode de fonctionnement de la pile à combustible dans laquelle est utilisée la plaque selon l'invention, le fluide de réfrigération est de préférence de l'eau.

Dans une réalisation préférentielle de la plaque, celle-ci est en composite polymère-graphite.

### Liste des figures

L'invention et ses différentes caractéristiques techniques seront mieux comprises à la lecture de la description suivante, accompagnée de figures représentant respectivement :
- figure 1, en vue cavalière coupée, un exemple de réalisation de la plaque d'alimentation selon l'invention ;
- figures 2A et 2B, deux schémas représentant l'implantation des canaux sur une plaque d'alimentation selon l'invention, telle que représentée sur la figure 1 ;
- figures 3A et 3B, l'implantation des canaux dans une deuxième réalisation de la plaque d'alimentation selon l'invention ; et
- figure 4, en vue cavalière, une réalisation particulière de la plaque selon l'invention.

### Description détaillée d'une réalisation de l'invention

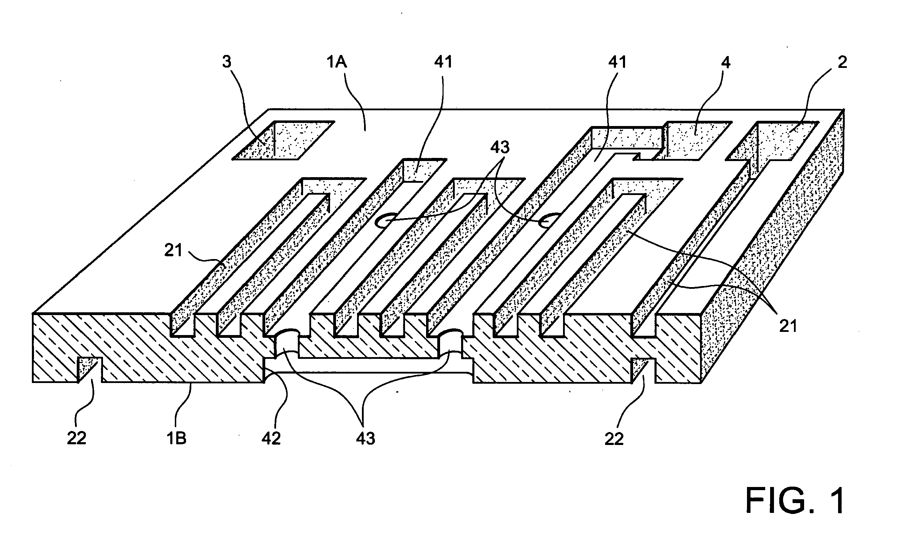

La figure 1 permet de comprendre la conception de la plaque d'alimentation selon l'invention en observant la coupe d'une réalisation préférentielle de cette plaque. Dans ce cas, celle-ci est réalisée en graphite et possède, avant la fin de sa fabrication deux faces planes qui sont usinées lors de la fabrication de celles-ci, pour donner les deux faces 1A et 1B.

Une première face 1A a été principalement représentée, en partie. En effet, aux quatre coins de celle-ci se trouve un trou d'alimentation 2 ou 3 en comburant ou combustible. Sur cette première face 1A, le trou d'alimentation en comburant 2 alimente un canal de circulation 21 en comburant, ce canal serpentant sur la surface 1A de façon à visiter la plus grande partie centrale de celle-ci. D'autre part, un trou d'alimentation en fluide de réfrigération 4 est placé également à la périphérie de la plaque et alimente un canal de réfrigération 41 parcourant des espaces laissés libres par le canal d'alimentation 21 en comburant.

On note que, dans la plupart des cas, le choix de faire circuler le comburant ou le combustible sur l'une ou l'autre des deux faces n'a pas d'importance.

Sur la deuxième face 1B, se trouve une organisation semblable, mais orientée à 90° par rapport à l'orientation des canaux de la première face 1A, ce qui explique le peu de canaux représenté sur cette deuxième face 1B, du fait que la figure est en coupe. En fait, on a représenté symboliquement un deuxième canal de circulation 22 du combustible, mais celui-ci est orienté dans un sens perpendiculaire à sa véritable orientation. Une ramification 42 du canal de réfrigération 41 est représentée vers le centre de la plaque et débouche sur la deuxième face 1B. Elle est alimentée à ses deux extrémités par des orifices 43 la faisant communiquer avec les parties du canal 41 se trouvant sur la première face 1A.

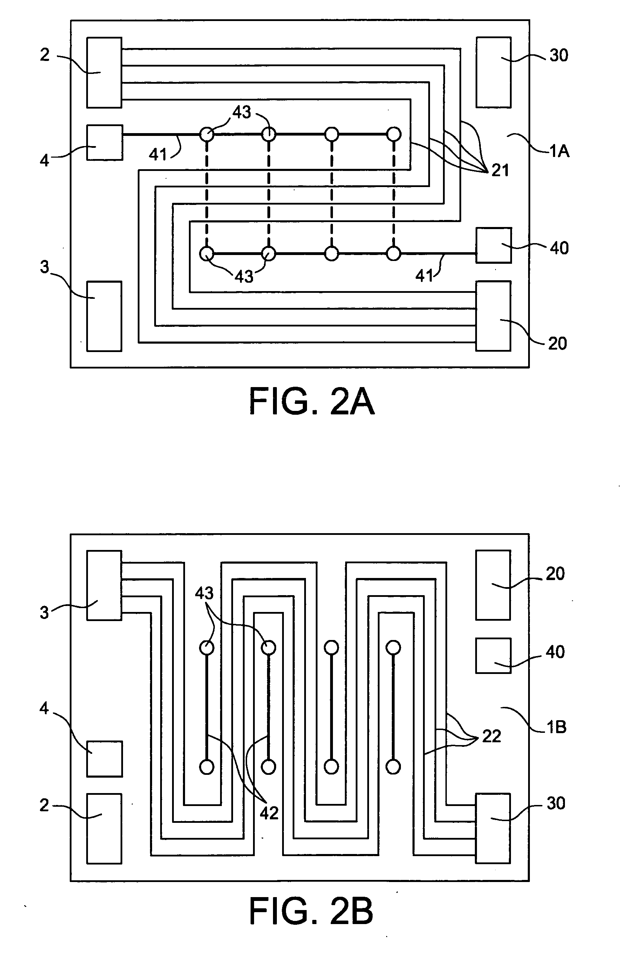

En référence aux figures 2A et 2B, il est plus facile de comprendre l'organisation relative de ces deux faces 1A et 1B. En effet, sur la figure 2A à première face 1A de la plaque est représentée schématiquement. On y retrouve les trous d'alimentation en comburant 2, en combustible 3 et en liquide de réfrigération 4, de même que les canaux de circulation 21 du comburant et le canal de réfrigération 41. Les canaux de circulation sillonnent la grande partie de la plaque en faisant un ou plusieurs zigzags- Au milieu de deux de ces zigzags de sens inversés, se trouvent le début et la fin de ramifications du canal de réfrigération 41 qui s'étendent parallèlement à la direction de l'orientation des canaux de circulation 21. On note que ces ramifications de canal de réfrigération 41 sont dotées de trous de traversée 43.

En retournant la plaque selon l'invention, représentée aux figures 1 et 2A, on se trouve en face de l'implantation représentée par la figure 2B. Par contre, les canaux de circulation 22 concernent le combustible et relient le trou d'alimentation en combustible, côté entrée, au trou d'alimentation, côté sortie, en combustible 30. Les trous d'alimentation 2 et 20 sont représentés sur cette figure 2B, mais ne sont pas reliés à des premiers canaux de circulation.

On constate que l'orientation du zigzag constituant la trajectoire de ces canaux de circulation 22 est orientée à 90° par rapport à ceux de la première face 1A.

On remarque que les ramifications 42, déjà représentées sur la face 1B de la figure 1, se trouvent entre les zigzags des premiers canaux de circulation 22. A chacune de leur extrémité, se trouve un passage de traversée 43 pour permettre à ces ramifications 42 d'être en liaison avec le reste du canal de réfrigération 41.

Les figures 2A et 2B montrent une implantation des canaux en zigzags, mais en utilisant les ramifications 42 du canal de réfrigération 41, il est possible d'imaginer que la trajectoire des canaux de circulation 22 ne soit pas en zigzags, mais en peigne, les différentes ramifications du ou des canaux 22 étant alors parallèles entre elles et par rapport aux ramifications 42 du canal de réfrigération 41.

La plaque d'alimentation décrite en regard des revendications 1, 2A et 2B, permet donc une circulation de comburant et de combustible sur respectivement ses deux faces. La plaque d'alimentation est donc alors du type bipolaire.

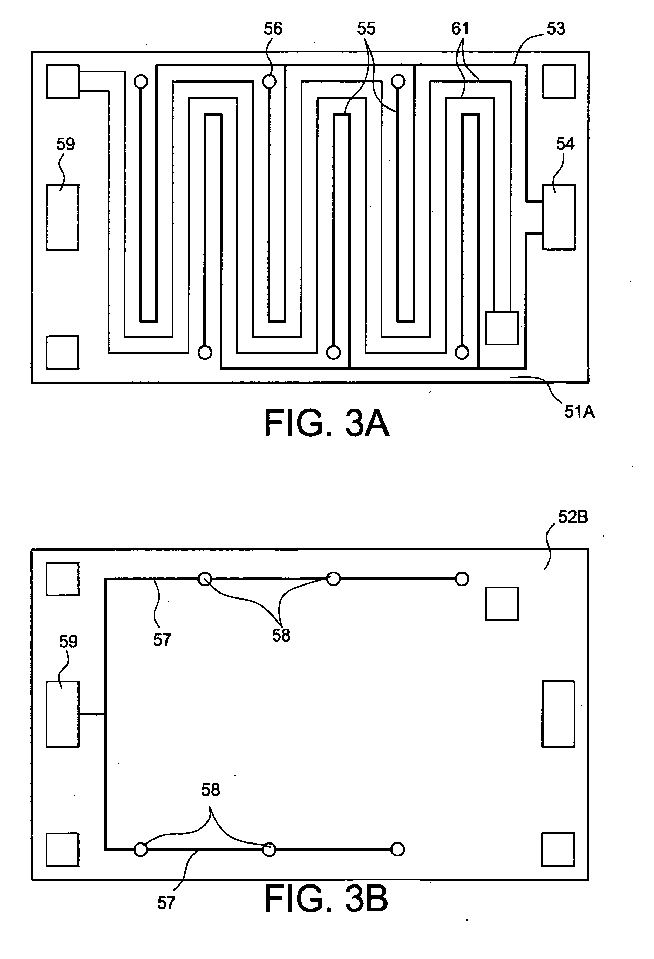

En référence aux figures 3A et 3B, il est possible que la plaque d'alimentation ne soit que du type monopolaire. L'exemple décrit par ces deux figures 3A et 3B montre qu'une seule face, en l'occurrence la face 51A, n'est parcourue que par les canaux de circulation 61. Cette même face 51A possède également un circuit de réfrigération au moyen d'un trou d'alimentation 54 en liquide réfrigérant et deux canaux latéraux de réfrigération 53 possédant plusieurs ramifications 55, parallèles aux parties parallèles des premiers canaux de circulation 61 dont la forme de parcours est en zigzags. Les ramifications 55 pénètrent chacune le creux d'un aller et retour du parcours en zigzags des canaux de circulation 61, et de façon alternée d'un côté à l'autre de la plaque. Dans cette réalisation, chaque ramification 55 fait un aller et retour sur la largeur de la plaque pour la traverser à son extrémité 56.

En faisant référence à la figure 3B, on voit que la deuxième face 52B possède pour seul canal la fin et la sortie du canal de réfrigération 53, notamment deux branches 57 qui permettent, au moyen de passages de traversée 58 d'être relié à l'autre partie du canal de réfrigération 53 sur la première face 51A. Ainsi, le liquide de réfrigération peut être évacué vers le trou d'alimentation 59 placé à la périphérie de la plaque. Dans ce cas, l'utilisation des différentes plaques polaires d'un empilement, impose l'alternance dans l'alimentation de chaque plaque entre combustible et comburant.

On note que, dans tous les cas, chaque plaque est traversée par les trois types de trous d'alimentation, c'est-à-dire pour le combustible, le comburant et le liquide de réfrigération.

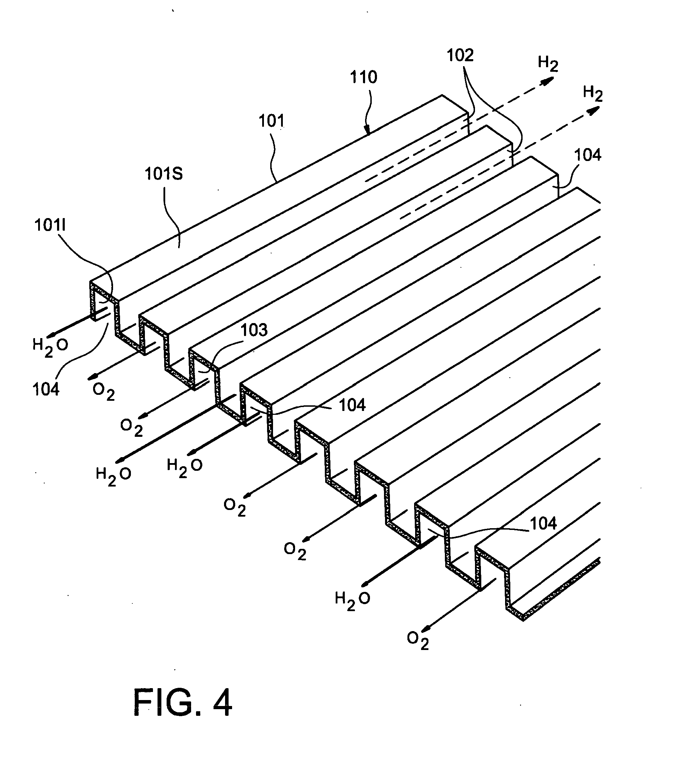

La figure 4 représente donc une réalisation particulière de la plaque d'alimentation selon l'invention car celle-ci est réalisée, en ce qui concerne sa partie centrale, par une tôle ondulée 101-Dans cette réalisation, les ondulations sont rectilignes et parallèles, mais ceci ne représente qu'une partie de la tôle ondulée, les canaux de circulation pouvant savoir une trajectoire sinueuse ou en zigzags.

En effet, les ondulations forment, en considérant chaque surface 101S et 101I de la tôle ondulée, des canaux de circulation 102, 103 et 104 disposés ainsi en alternance. En d'autres termes, les canaux de circulation 102 formés sur la surface supérieure 101S correspondent à des séparations de deux canaux 103 et 104 formés sur la surface inférieure 101I. En d'autres termes, les canaux de circulation sont alternés avec les ondulations qui les séparent.

Sur cette figure 4, deux premiers canaux de circulation 102 ont été représentés sur la surface supérieure 1S. On leur a attribué le rôle de canaux de circulation de combustible, à savoir de l'hydrogène H₂). Concernant les canaux de circulation relatifs à la surface inférieure 101I, on a représenté en alternance deux premiers canaux de circulation 103 de comburant, à savoir de l'oxygène (O₂), avec un deuxième canal de circulation 4 de liquide réfrigérant, à savoir de l'eau (H₂O). De même, on dispose sur la surface supérieure 1S quelques deuxièmes canaux de circulation 104 du liquide réfrigérant qu'est l'eau.

Cette réalisation en tôle ondulée impose que la plaque d'alimentation soit complétée par un cadre, non représenté sur cette figure 4, et qui possède des trous d'alimentation en combustible, comburant et liquide de réfrigération, de manière analogue aux réalisations précédentes.

On a décrit l'utilisation d'une tôle ondulée sur la figure 4, ce qui suppose l'utilisation d'un métal pour réaliser la plaque d'alimentation selon l'invention. On pourrait très bien envisager une telle réalisation en graphite expansé.

Le tracé des trajectoires des canaux de circulation de toutes ses réalisations forme des virages en zigzags. Ceci n'est qu'une forme de réalisation, le principe selon l'invention consistant à placer des canaux parallèlement les uns par rapport aux autres et de les faire changer de direction de façon parallèle. Il est ainsi possible d'occuper la plus grande partie des deux faces de chaque plaque d'alimentation selon l'invention.

Dans la réalisation selon l'invention, tous ces canaux de circulation se trouvent dans le même plan. De plus, à la fois le comburant, le combustible et le liquide de réfrigération se trouvent en contact direct avec les éléments de base EME. En d'autres termes, aucun plan particulier n'est réservé à la réfrigération, ni à la distribution des gaz combustible et comburant. Au contraire, une seule et même zone ou couche assure la double fonction de distribution du comburant ou du combustible et du liquide de réfrigération. De plus, en groupant les entrées entre elles et les sorties entre elles, il est possible de définir deux zones d'alimentation dans le cadre 20 où des canaux d'alimentation pourront passer pour alimenter les entrées et sorties.

## Revendications

1. Plaque d'alimentation d'au moins une cellule de pile à combustible comprenant :
- des trous d'alimentation en combustible (3, 30), comburant (2, 20) et fluide de réfrigération (4, 40, 54, 59) ;
- deux faces opposées (1A, 1B, 51A, 51B) sur au moins une lesquelles se trouvent des canaux de circulation (21, 22, 61) pour le combustible ou le comburant,
- au moins un canal de réfrigération (41, 53) se trouvant sur la ou les même(s) face(s) que celle où se trouvent les canaux de circulation du combustible ou du comburant, de façon à être coplanaire(s) avec ces premiers canaux de circulation,
**caractérisée en ce que** les premiers canaux de circulation respectivement du combustible (22) et du comburant (21) se trouvent sur les deux faces (1A, 1B) de la plaque, la réfrigération ayant lieu sur les deux faces de la plaque, la plaque constituant ainsi une plaque bipolaire, un seul canal de réfrigération (41) se trouvant à la fois sur les deux faces (1A, 1B) et, de ce fait, possède plusieurs passages de traversée (43) de la plaque d'une face à l'autre et des ramifications (42).

2. Plaque d'alimentation selon la revendication 1, **caractérisée en ce que** l'entrée et la sortie du canal de réfrigération sont placées sur la face opposée par rapport à celle ou se trouve le canal de réfrigération, celui-ci traversant l'épaisseur de la plaque.

3. Plaque d'alimentation selon la revendication 1, **caractérisée en ce que** les différents canaux de circulation possèdent des entrées et sorties groupées à un endroit déterminé de la plaque, de même que les trous d'alimentation en comburant, combustible et fluide de réfrigération.

4. Plaque d'alimentation selon l'une quelconque des revendications précédentes, **caractérisée en ce que** les trajectoires des canaux de circulation (21, 22, 61) et du ou des canaux de réfrigération (41, 53) sont intercalées les unes par rapport aux autres, épousant ainsi le même tracé.

5. Plaque d'alimentation selon l'une quelconque des revendications 1 à 3, **caractérisée en ce que** la trajectoire des canaux de circulation (21, 22, 61) est en zigzag.

6. Plaque d'alimentation selon l'une quelconque des revendications précédentes, **caractérisée en ce que** le ou les canal de réfrigération possède des ramifications (42, 55) dont les entrées et sorties sont espacées sur une grande partie de la longueur de la plaque.

7. Plaque d'alimentation selon l'une quelconque des revendications précédentes, **caractérisée en ce que** la trajectoire des canaux de circulation du combustible et du comburant et de réfrigérant sont parallèles de manière à former une structure en peigne.

8. Plaque d/alimentation selon les revendications 1 et 7, **caractérisée en ce que** l'orientation des canalisations est décalée de 90° d'une face par rapport à l'autre.

9. Plaque d'alimentation selon les revendications 6 et 8, **caractérisée en ce que** la traversée de la plaque par le canal de réfrigération (41) s'effectue par des passages de traversée (43), à l'extrémité de chaque ramification (42) avec un changement d'orientation de 90° pour le canal de réfrigération à la traversée de la plaque.

10. Plaque d'alimentation selon la revendication 1, **caractérisée en ce qu'**elle est constituée d'une plaque ondulée (101) de façon à former des premiers canaux de circulation pour le combustible (102) sur une première face intercalés avec des canaux de réfrigération (104) parallèles sur une première face, et des deuxièmes canaux de circulation du comburant (103) intercalés avec des canaux de réfrigération (104) parallèles sur la deuxième face, de manière à ce que les canaux de la première face forment des séparations des canaux de la deuxième face et vice versa, tous les canaux se trouvant sur le même plan, la plaque constituant une plaque bipolaire.

11. Plaque d'alimentation de type bipolaire selon la revendication 10, **caractérisée en ce que** la plaque est une tôle ondulée, entourée éventuellement d'un cadre traversé par les trous d'alimentation.

12. Plaque d'alimentation selon l'une quelconque des revendications 1 à 9, **caractérisée en ce que** le ou les canaux de réfrigération (41, 53) ou ces ramifications (42) sont placés entre plusieurs canaux de circulation (21, 22, 61) de comburant ou de combustible.

13. Plaque d'alimentation selon la revendication 1, **caractérisée en ce que** le fluide de réfrigération est de l'eau.

14. Plaque d'alimentation selon l'une quelconque des revendications 1 à 9 et 12 et ou 13, **caractérisée en ce que** la plaque est en composite polymère-graphite.

## Claims

1. A feed plate of at least one fuel cell which includes:
- apertures for the feeding of fuel (3, 30), oxidiser (2, 20) and coolant fluid (4, 40, 54, 59);
- two opposite faces (1A, 1B, 51A, 51B) on at least one of which there are the circulation channels (21, 22, 61) for the fuel or the oxidiser,
- at least one refrigeration channel (41, 53) located on the same face or faces as that with the channels for circulation of the fuel or oxidiser, so as to be coplanar with these first circulation channels,
**characterised in that** the first channels for circulation respectively of the fuel (22) and the oxidise:r (21) are located on both faces (1A, 1B) of the plate, with refrigeration taking place or both faces of the plate, so that the plate then constitutes a bipolar plate, with one single refrigeration channel (41) being located on both faces (1A, 1B) and, as a consequence, having several though passages (43) in the plate, from one face to the other, as well as branches (42).

2. A feed plate according to claim 1,
**characterised in that** the entrance and the exit of the refrigeration channel are positioned on the opposite face in relation to that where the refrigeration channel is located, with the latter passing through the thickness of the plate.

3. A feed plate according to claim 1,
**characterised in that** the different circulation channels have entrances and exits grouped together at one set position on the plate, as well as apertures for the feeding of oxidiser, fuel and coolant fluid.

4. La feed plate according to any of the previous claims, **characterised in that** the trajectories of the circulation channels (21, 22, 61) and of the refrigeration channel or channels (41, 53) are interleaved in relation to each other, and so follow the same path.

5. A feed plate according to any of claims 1 to 3, **characterised in that** the trajectory of the circulation channels (21, 22, 61) is of zigzag form.

6. A feed plate according to any of the previous claims, **characterised in that** the refrigeration channel or channels has branches (42, 55) whose entrances and exits are spaced over most of the length of the plate.

7. A feed plate according to any of the previous claims, **characterised in that** the trajectory of the circulation channels for the fuel and oxidiser and coolant are parallel with each other, so as to form a comb-like structure.

8. A feed plate according to claims 1 and 7, **characterised in that** the channel orientation of one face is offset by 90° in relation to the other.

9. A feed plate according to claims 6 and 8, **characterised in that** the passage through the plate by the refrigeration channel (41) takes place by means of through passages (43) at the end of each branch (42), with a change of orientation trough 90° for the refrigeration channel at the passage through the plate.

10. A feed plate according to claim 1,
**characterised, in that** it is composed of a corrugated plate (101) so as to form first channels for circulation of the fuel (102) on a first face, interleaved with parallel refrigeration channels (104) on a first face, and second channels for circulation of the oxidiser (103) interleaved with parallel refrigeration channels (104) on the second face, so that the channels on the first face form separations for the channels of the second face and vice versa, with all of the channels being located in the same plane, and the plate thus constituting a bipolar plate.

11. A feed plate of the bipolar type according to claim 10, **characterised in that** the plate is a corrugated sheet, possible surrounded by a frame, pierced by feed apertures.

12. A feed plate according to any of claims 1 to 9, **characterised in that** the refrigeration channel or channels (41, 53), or these branches (42), are positioned between several channels (21, 22, 61) for the circulation of oxidiser or fuel.

13. A feed plate according to claim 1,
**characterised in that** the coolant fluid is water.

14. A feed plate according to any of claims 1 to 9 and 12 and/or 13, **characterised in that** the plate is made from a polymer-graphite composite.

## Patentansprüche

1. Versorgungsplatte für wenigstens eine Zelle einer Brennstoffzelle, umfassend:
- Löcher zur Versorgung mit Brennstoff (3, 30), mit Verbrennungsförderer (2, 20) und mit Kühlfluid (4, 40, 54, 59);
- zwei gegenüberliegende Flächen (1A, 1B, 51A, 51B), wobei sich auf wenigstens einer von ihnen Zirkulationskanäle (21, 22, 61) für den Brennstoff oder für den Verbrennungsförderer befinden,
- wenigstens einen Kühlkanal (41, 53), der sich auf der oder den gleiche(n) Fläche(n) wie jene befindet, wo sich die Zirkulationskanäle für den Brennstoff oder den Verbrennungsförderer befinden, derart, dass er/sie koplanar ist/sind mit diesen ersten Zirkulationskanälen,
**dadurch gekennzeichnet, dass** die ersten Zirkulationskanäle für den Brennstoff (22) bzw. für den Verbrennungsförderer (21) sich auf den beiden Flächen (1A, 1B) der Platte befinden, wobei die Kühlung auf den beiden Flächen der Platte erfolgt, wobei die Platte somit eine bipolare Platte bildet, wobei sich ein einziger Kühlkanal (41) gleichzeitig auf den beiden Flächen (1A, 1B) befindet und daher mehrere Durchströmungsdurchlässe (43) der Platte von der einen Fläche zur anderen sowie Verzweigungen (42) besitzt.

2. Versorgungsplatte nach Anspruch 1, **dadurch gekennzeichnet, dass** der Eingang und der Ausgang des Kühlkanals auf der gegenüberliegenden Fläche bezogen auf jene platziert sind, wo sich der Kühlkanal befindet, wobei dieser die Dicke der Platte durchsetzt.

3. Versorgungsplatte nach Anspruch 1, **dadurch gekennzeichnet, dass** die verschiedenen Zirkulationskanäle Eingänge und Ausgänge besitzen, die an einer bestimmten Stelle der Platte gruppiert sind, ebenso wie Löcher zur Versorgung mit Verbrennungsförderer, mit Brennstoff und mit Kühlfluid.

4. Versorgungsplatte nach einem der vorhergehenden Ansprüche, **dadurch gekennzeichnet, dass** die Trajektorien der Zirkulationskanäle (21, 22, 61) und des oder der Kühlkanäle (41, 53) miteinander verschachtelt sind, so dass sie sich an den gleichen Verlauf anschmiegen.

5. Versorgungsplatte nach einem der Ansprüche 1 bis 3, **dadurch gekennzeichnet, dass** die Trajektorie der Zirkulationskanäle (21, 22, 61) zickzackförmig ist.

6. Versorgungsplatte nach einem der vorhergehenden Ansprüche, **dadurch gekennzeichnet, dass** der oder die Kühlkanal Verzweigungen (42, 55) besitzt, deren Eingänge und Ausgänge über einen großen Teil der Länge der Platte beabstandet sind.

7. Versorgungsplatte nach einem der vorhergehenden Ansprüche, **dadurch gekennzeichnet, dass** die Trajektorie der Zirkulationskanäle für den Brennstoff und den Verbrennungsförderer und das Kühlmittel parallel sind, derart, dass sie eine Kammstruktur bilden.

8. Versorgungsplatte nach den Ansprüchen 1 und 7, **dadurch gekennzeichnet, dass** die Orientierung der Leitungen von einer Fläche bezogen auf die andere um 90 Grad versetzt ist.

9. Versorgungsplatte nach den Ansprüchen 6 und 8, **dadurch gekennzeichnet, dass** der Durchlaß des Kühlkanals (41) durch die Platte durch Durchströmungsdurchlässe (43) am Ende jeder Verzweigung (42) erfolgt, mit einer Änderung der Orientierung um 90 Grad für den Kühlkanal beim Durchsetzen der Platte.

10. Versorgungsplatte nach Anspruch 1, **dadurch gekennzeichnet, dass** sie aus einer gewellten Platte (101) gebildet ist, derart, dass erste Zirkulationskanäle für den Brennstoff (102) auf einer ersten Fläche verschachtelt mit parallelen Kühlkanälen (104) auf einer ersten Fläche gebildet werden, sowie zweite Zirkulationskanäle für den Verbrennungsförderer (103), verschachtelt mit parallelen Kühlkanälen (104) auf der zweiten Fläche, derart, dass die Kanäle der ersten Fläche Abtrennungen für die Kanäle der zweiten Fläche und vice versa bilden, wobei sich alle Kanäle in ein und derselben Ebene befinden, wobei die Platte eine bipolare Platte bildet.

11. Versorgungsplatte vom bipolaren Typ nach Anspruch 10, **dadurch gekennzeichnet, dass** die Platte ein gewelltes Blech ist, welches gegebenenfalls von einem Rahmen umgeben ist, der von den Versorgungslöchern durchsetzt wird.

12. Versorgungsplatte nach einem der Ansprüche 1 bis 9, **dadurch gekennzeichnet, dass** der oder die Kühlkanäle (41, 53) oder diese Verzweigungen (42) zwischen mehreren Zirkulationskanälen (21, 22, 61) für den Verbrennungsförderer oder den Brennstoff platziert sind.

13. Versorgungsplatte nach Anspruch 1, **dadurch gekennzeichnet, dass** das Kühlfluid Wasser ist.

14. Versorgungsplatte nach einem der Ansprüche 1 bis 9 und 12 und/oder 13, **dadurch gekennzeichnet, dass** die Platte aus einem Polymer-Graphit-Verbundstoff hergestellt ist.
